# EUROPÄISCHE PATENTSCHRIFT

(11) **EP 2 006 063 B1**
(45) Veröffentlichungstag und Bekanntmachung des Hinweises auf die Patenterteilung: **20.10.2010**
(21) Anmeldenummer: 07012147.0
(22) Anmeldetag: 21.06.2007
(51) Int. Cl.: B29C 33/48, B29C 39/12, A45D 40/16, B29C 39/34

(54) **Vorrichtung zur Herstellung einer Lippenstiftmine mit zwei Komponenten**
Device for manufacturing a lipstick with two components
Dispositif de fabrication d'une mine de rouge à lèvres à deux composants

(43) Veröffentlichungstag der Anmeldung: 24.12.2008
(73) Patentinhaber: Weckerle GmbH, 82362 Weilheim (DE)
(72) Erfinder: Klein, Helmut, 82380 Peißenberg (DE)
(74) Vertreter: Hohgardt, Martin

(56) Entgegenhaltungen:
- DE-C- 946 257
- FR-A- 1 406 950
- GB-A- 276 697
- US-A- 2 781 548
- US-A- 3 752 436

## Beschreibung

Die vorliegende Erfindung betrifft eine Form zum Herstellen einer geformten Masse aus Massen mit mindestens zwei Komponenten und insbesondere ein Verfahren zum Herstellen von Lippenstiftminen aus mindestens zwei Komponenten.

In einer Formvorrichtung zum Formen von Massen, beispielsweise zur Herstellung von Lippenstiftminen, wird die eine zu formende Masse mit Hilfe einer Befüllstation im heißen und flüssigen Zustand in einzelne Formen gefüllt. Die eingefüllte Masse wird dann mit Hilfe einer Kühlstation in den Formen abgekühlt und nach dem Abkühlvorgang mit Hilfe einer Entformstation im festen Zustand aus den Formen entnommen.

In US 4,743,443 und DE 346257 A werden Vorrichtungen und Verfahrenen zum Herstellen von Lippenstiftminen aus einer Masse bestehend aus zwei oder mehr verschiedenen Komponenten beschrieben. Hierfür werden herausnehmbare Einsätze verwendet. Diese verhindern in einem ersten Schritt, dass beim Einfüllen der ersten Komponente die erste Komponente in einen Bereich gelangt, in den im zweiten Schritt die zweite Komponente eingefüllt werden soll.

Mit einem derartigen Verfahren können allerdings nur Lippenstiftminen mit sehr einfachen Ausgestaltungen für die erste und die zweite Komponente gebildet werden. Grundsätzlich besteht allerdings ein Bedarf an Vorrichtungen und Verfahren mit denen Lippenstiftminen hergestellt werden können, bei denen die mindestens zwei Komponenten komplizierte Ausgestaltungen beziehungsweise Strukturen bilden. Die Aufgabe der vorliegenden Erfindung besteht deshalb in der Bereitstellung eines entsprechenden Verfahrens und einer entsprechenden Vorrichtung.

Erfindungsgemäß wird diese Aufgabe durch eine Formvorrichtung zum Formen von Massen bestehend aus mindestens zwei Komponenten gemäß Anspruch 1 und durch ein entsprechendes Verfahren gemäß Anspruch 6 gelöst.

Die Formvorrichtung zum Formen von Massen bestehend aus mindestens zwei Komponenten, insbesondere zum Formen von Lippenstiftminen, weist hierfür mindestens eine Form auf in die die zu formende Masse gegossen wird. Außerdem weist die Formvorrichtung mindestens einen Kern auf, der in die mindestens eine Form eingeführt und wieder herausgenommen werden kann. Erfindungsgemäß weist der mindestens eine Kern eine veränderbare Außenfläche auf.

Mit Hilfe der erfindungsgemäßen Formvorrichtung ist es erstmals möglich, geformte Massen aus zwei oder mehreren Komponenten zu bilden, bei denen die geformte Masse aus mindestens einer der beiden Komponenten eine komplizierte Ausgestaltung oder Struktur aufweist. Bei den im Stand der Technik verwendeten Kernen, muss die durch die erste Komponente gebildete Ausgestaltung derart einfach sein, dass der hierfür verwendet Kern ohne Beeinträchtigung der aus der ersten Komponente gebildeten Ausgestaltung wieder aus der Form herausgenommen werden kann. Derartige Ausgestaltungen von geformten Komponenten beziehungsweise Massen werden als einfach bezeichnet. Bei komplizierten Ausgestaltungen ist das einfache Herausnehmen des Kerns nicht möglich. Wenn beispielsweise an der Außenseite einer Lippenstiftmine eine Netzstruktur aus einer ersten Komponente angeordnet sein soll, die von der zweiten Komponente umschlossen ist, kann diese Netzstruktur nicht mit den im Stand der Technik bekannten Vorrichtungen und Verfahren gebildet werden. Diese netzartige Ausgestaltung ist also ein Beispiel für eine komplizierte Ausgestaltung.

Durch die erfindungsgemäße Vorrichtung kann allerdings auch eine derart komplizierte Ausgestaltung gebildet werden. Hierfür wird beispielsweise ein Kern verwendet, dessen Außenfläche das Gegenstück für die zu bildende Ausgestaltung der ersten Komponente bildet. Durch die erfindungsgemäße, veränderbare Außenfläche des Kerns, kann der Kern ohne Beeinträchtigung der aus der ersten Komponente gebildeten Ausgestaltung aus der Form herausgenommen werden. Hierfür wird die Außenfläche des Kerns vor dem Herausnehmen aus der Form derart verändert, dass die durch die erste Komponente gebildete Ausgestaltung nicht beschädigt wird.

In einer bevorzugten Ausführungsform haben die mindestens zwei Komponenten unterschiedliche Farben.

In einer weiter bevorzugten Ausführungsform weist die Vorrichtung einen zweiten veränderbaren Kern auf, wobei die Abmessungen des zweiten Kerns zumindest teilweise kleiner sind als die des ersten Kerns. Mit Hilfe eines derartigen zweiten Kerns kann beispielsweise auch geformte Masse aus drei Komponenten hergestellt werden.

Vorzugsweise wird die veränderbare Außenfläche des Kerns durch einen einfallenden Kern realisiert. Der einfallende Kern kann beispielsweise aus einem flexiblen Material hergestellt werden. Während dem Formen der Ausgestaltung der ersten Komponenten wird der flexible Kern mit Hilfe eines geeigneten Mittels in seiner Form gehalten. Beispielsweise kann hierfür der flexible Kern mit einem Gas oder einer Flüssigkeit gefüllt werden. Für das Herausnehmen des Kerns aus der Form und der aus der ersten Komponente gebildeten Ausgestaltung, sorgt dann das Mittel dafür, dass der Kern nicht mehr seine Form hält, sondern quasi in sich zusammen fällt beziehungsweise zusammen gezogen wird. Hierfür kann beispielsweise die Flüssigkeit oder das Gas wieder aus dem flexiblen Kern entfernt werden.

Erfindungsgemäß weist der Kern bewegliche Elemente auf, mit denen die Außenfläche verändert werden kann. Diese beweglichen Elemente können beispielsweise mit Hilfe von Druck oder Magnetismus bewegt werden. Während dem Einfüllen der ersten Komponente können die beweglichen Komponenten herausgefahren sein. Erfindungsgemäß berühren die beweglichen Komponenten in dem ausgefahrenen Zustand die Innenwand der Form. Somit werden diese Stellen von der ersten Komponente frei gehalten.

Zum Herausnehmen des Kerns werden die beweglichen Elemente vorzugsweise in den Kern hereingefahren, um das Herausnehmen des Kerns aus der durch die erste Komponente gebildete Ausgestaltung zu ermöglichen.

Um ein möglichst einfaches Entformen zu ermöglichen, ist der erfindungsgemäße Kern vorzugsweise mit einem antihaft Material beschichtet. Außerdem weist der Kern vorzugsweise Kanäle auf, durch die wahlweise ein Heiz- oder ein Kühlmedium fließen kann. Durch die Verwendung von Kanälen für ein Heiz- oder Kühlmedium an der Außenseite der Form und in dem Kern, kann der Aushärtungsprozess im Vergleich zur Verwendung von nur einer Komponente beschleunigte werden.

Erfindungsgemäß wird die Aufgabe auch durch ein Verfahren zum Formen von Massen bestehend aus mindestens zwei Komponenten, insbesondere zum Formen von Lippenstiftminen, gelöst. Hierfür wird zunächst mindestens ein Kern in mindestens eine Form eingeführt und dann die erste Komponente der zu formenden Masse in die Form eingefüllt. Daraufhin wird die Außenfläche des Kerns verändert und der Kern aus der Form herausgenommen. Dann wird die zweite Komponente der zu formenden Masse in die Form gefüllt.

Weitere Vorteile und Merkmale der Erfindung sind der nachfolgenden detaillierten Beschreibung zu entnehmen, in welcher die Erfindung detaillierter und in Bezug auf die in den beigefügten Zeichnungen dargestellten Ausführungsbeispiele beschrieben wird.

In den Zeichnungen zeigt:
- Fig. 1: einen Querschnitt durch eine Formvorrichtung mit einer Form und einem Kern mit herausgefahrenen beweglichen Elementen, wie er im Zusammenhang mit der vorliegenden Erfindung verwendet werden kann;
- Fig. 2: einen Querschnitt durch die in Figur 1 gezeigte Formvorrichtung mit hereingefahrenen beweglichen Elementen in dem Kern;
- Fig. 3: einen Querschnitt durch die in Figur 1 gezeigte Formvorrichtung während dem Befüllen mit der zweiten Komponente; und
- Fig. 4: die mit Hilfe der erfindungsgemäßen Formvorrichtung und dem erfindungsgemäßen Verfahren geformte Lippenstiftmine.

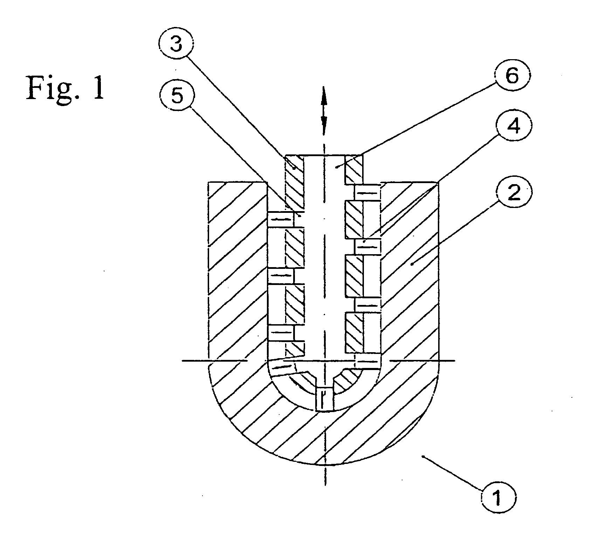

Figur 1 zeigt in einen Querschnitt durch eine Formvorrichtung 1 mit einer Form 2 und einem Kern 2, wie er im Rahmen der vorliegenden Erfindung verwendet werden kann. In Figur 1 befindet sich Kern 3 in der Form 2. Der Kern 3 weist in diesem Ausführungsbeispiel bewegliche Elemente 4 auf, mit denen die Außenfläche des Kerns 3 verändert werden kann.

In Figur 1 sind die beweglichen Elemente 4 in einem so genannten herausgefahrenen Zustand. Die beweglichen Elemente 4 sind derart aus dem Kern 3 herausgefahren, dass sie eine Verbindung zwischen dem Kern 3 und der Innenseite der Form 2 herstellen. In dem vorliegenden Ausführungsbeispiel berühren die beweglichen Elemente 4 die Innenseite der Form 2 derart, dass eine in den Zwischenraum zwischen Form 2 und Kern 3 eingefüllte erste Komponente an diesen Stellen die Innenseite der Form nicht berühren kann.

Somit wird durch den Kern 3, die beweglichen Elemente 4 und die Form 2 ein Hohlraum gebildet, in den die erste Komponente gefüllt werden kann. Dabei definiert der Hohlraum den Bereich der Lippenstiftmine, in der später die erste Komponente angeordnet sein soll.

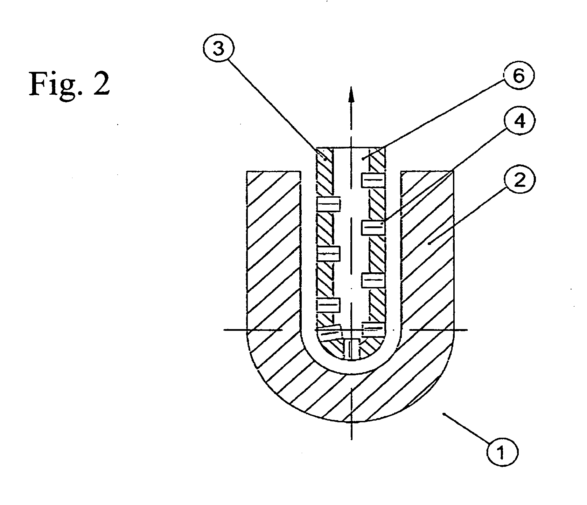

Der Kern 3 weist außerdem Aussparungen 5 auf. In diese Aussparungen 5 können die beweglichen Elemente 4 hereingefahren werden. Figur 2 zeigt eine beispielhaft, wie der Kern 3 mit eingefahrenen beweglichen Elementen 4 aussehen kann.

Das Heraus- und Hereinfahren der beweglichen Elemente 4 kann mit Hilfe unterschiedlicher Mittel ermöglicht werden. In den Figuren 1 und 2 weist der Kern 3 in seinem Inneren einen Kanal 6 auf. Mit Hilfe dieses Kanals 6 können die beweglichen Elemente 4 mit Hilfe von Druck bewegt, also heraus- und hereingefahren werden. Alternativ können die beweglichen Elemente 4 beispielsweise mit Hilfe von Magnetismus oder auch mechanischen Mitteln bewegt werden.

Mit Hilfe der erfindungsgemäßen Vorrichtung 1 kann dann beispielsweise eine Lippenstiftmine einfach hergestellt werden. In einem ersten Schritt wird hierfür beispielsweise der Kern 3 in eine Form 2 eingeführt. Dabei können die in diesem Ausführungsbeispiel verwendeten beweglichen Elemente 4 schon aus dem Kern 3 herausgefahren sein oder erst herausgefahren werden, wenn der Kern 3 in der Form 2 angeordnet ist. Der Kern 3 bildet zusammen mit den beweglichen Elementen 4 und der Innenseite der Form 3 einen Hohlraum, der dann mit der ersten Komponente gefüllt werden kann. Nach dem Einfüllen erhärtet die erste Komponente, vorzugsweise unterstützt durch Kühlungen, die in der Form 2 und/oder dem Kern 3 angeordnet sein können.

Nach dem zumindest teilweisen Erhärten der ersten Komponente, wird der Kern 3 aus der Form 2 herausgenommen. Hierfür wird zunächst die veränderbare Außenfläche des Kerns 3 verändert. In dem in den Figuren 1 und 2 gezeigten Ausführungsbeispiel findet dieses Verändern der Außenfläche durch Hereinfahren der beweglichen Elemente 4 statt. Hierdurch wird die Außenfläche des Kerns 3 derart verändert, dass der Kern 3 aus der Form 2 herausgenommen werden kann, ohne dass die zumindest teilweise erhärtete erste Komponente hierbei beschädigt wird.

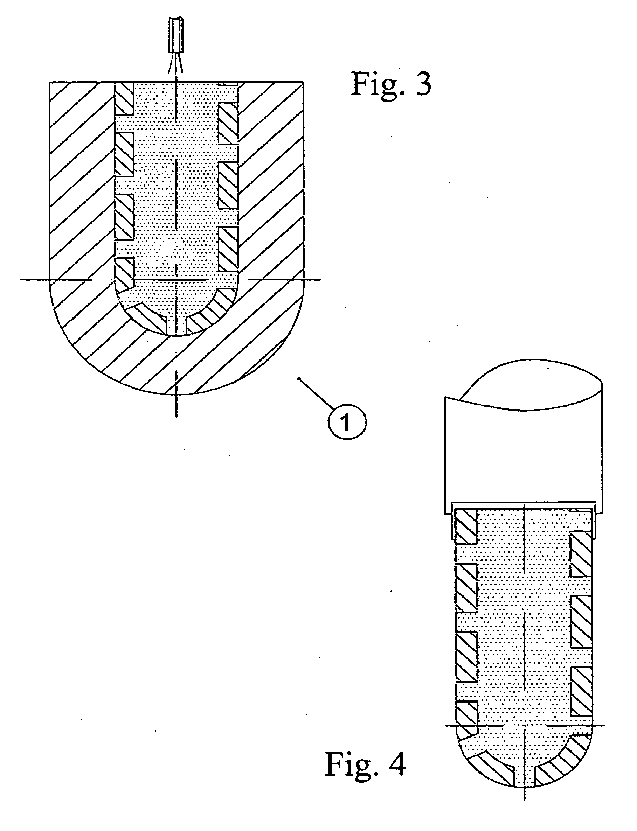

Nach dem Herausnehmen des Kerns 3 wird die zweite Komponente in den aus der Innenseite der Form 2 und der zumindest teilweise erhärteten ersten Komponente gebildeten Hohlraum gefüllt (vgl. Fig. 3). Anschließend kann die aus mindestens zwei Komponenten gebildete Lippenstiftmine mit bekannten Entformstationen aus der Form 2 entnommen werden (vgl. Fig. 4).

## Patentansprüche

1. Formvorrichtung (1) zum Formen von Massen bestehend aus mindestens zwei Komponenten, insbesondere zum Formen von Lippenstiftminen, mit mindestens einer Form (2), in die die zu formende Masse gegossen werden kann und mit einem Kern (3), der in die mindestens eine Form (2) eingeführt und wieder herausgenommen werden kann,
**dadurch gekennzeichnet, dass**
der mindestens eine Kern (3) bewegliche Elemente (4) aufweist, die aus Aussparungen (5) in dem Kern (3) heraus und in die Aussparungen (5) in dem Kern (3) hinein gefahren werden können, und die beweglichen Elemente (4) im herausgefahrenen Zustand die Innenseite der Form (2) an einer Stelle derart berühren, dass eine dann eingefüllte Komponente diese Stelle der Innenseite der Form (2) nicht berühren kann.

2. Formvorrichtung (1) gemäß Anspruch 1, **dadurch gekennzeichnet, dass** die beweglichen Elemente (4) mit Hilfe von Druck bewegt werden.

3. Formvorrichtung (1) gemäß Anspruch 1, **dadurch gekennzeichnet, dass** die beweglichen Elemente (4) mit Hilfe von Magnetismus bewegt werden.

4. Formvorrichtung (1) gemäß einem der Ansprüche 1 bis 3, **dadurch gekennzeichnet, dass** die Außenfläche des Kerns (3) mit einem antihaft Material beschichtet ist.

5. Formvorrichtung (1) gemäß einem der Ansprüche 1 bis 4, **dadurch gekennzeichnet, dass** der Kern (3) Kanäle für ein Heiz- und/oder Kühlmedium aufweist.

6. Verfahren zum Formen von Massen bestehend aus mindestens zwei Komponenten, insbesondere zum Formen von Lippenstiftminen, wobei das Verfahren die folgenden Schritte aufweist:
- Einführen mindestens eines Kerns (3) in mindestens eine Form (2),
- Einfüllen einer ersten Komponente der mindestens zwei Komponenten der zu formenden Masse in die Form (2),
- Verändern der Außenflächen des Kerns (3),
- Herausnehmen des Kerns (3) mit den veränderten Außenflächen aus der Form (2) und
- Einfüllen einer zweiten Komponente der mindestens zwei Komponenten der zu formenden Masse in die Form (2)
**dadurch gekennzeichnet, dass**
- die Außenfläche des Kerns (3) mit Hilfe von beweglichen Elementen (4) verändert wird, wobei die beweglichen Elemente (4) aus Aussparungen in dem Kern (3) heraus und in die Aussparungen in dem Kern (3) hinein gefahren werden können, und die beweglichen Elemente (4) im herausgefahrenen Zustand die Innenseite der Form (2) an einer Stelle derart berühren, dass eine dann eingefüllte Komponente diese Stelle der Innenseite der Form (2) nicht berühren kann.

## Claims

1. Molding apparatus (1) for molding masses consisting of at least two components, in particular for molding lipstick leads, with at least one mold (2), in which the masses to be molded can be poured into and with a core (3), which can be inserted in and extracted from said at least one mold (2)
**characterized in that**
said at least one core (3) comprises moveable elements (4), which can be moved out of recesses (5) in the core (3) and which can be moved back into said recesses (5) in the core (3) and the moveable elements (4) in the moved out state touch the inner surface of the mold (2) at an area, such that a component then filled in can not touch this area of the inner surface of the mold (2).

2. Molding apparatus (1) according to claim 1, **characterized in that** said moveable elements (4) are moved by means of pressure.

3. Molding apparatus (1) according to claim 1, **characterized in that** said moveable elements (4) are moved by means of magnetism.

4. Molding apparatus (1) according to any of the claims 1 to 3, **characterized in that** the outer surface of the core (3) is coated with an anti-adhesive material.

5. Molding apparatus (1) according to any of the claims 1 to 4, **characterized in that** said core (3) comprises channels for a heating and/or a cooling medium.

6. Method for molding of masses consisting of at least two components, in particular for molding lipstick leads, wherein the method comprises the following steps:
- inserting at least one core (3) into at least one mold (2),
- filling a first component of said at least two components of said to be molded mass into said mold (2),
- modifying the outer surfaces of the core (3),
- extracting said core (3) with the modified outer surfaces out of said mold (2) and
- filling a second component of said at least two components of said to be molded mass into said mold (2)
**characterized in that**
- the outer surface of the core (3) is modified by means of moveable elements (4), wherein the moveable elements (4) can be moved out of recesses in the core (3) and can be moved back into said recesses in the core (3) and the moveable elements (4) in the moved out state touch the inner surface of the mold (2) at an area, such that a component then filled in can not touch this area of the inner surface of the mold (2).

## Revendications

1. Dispositif formant moule (1), pour mouler des masses constituées d'au moins deux composants, en particulier pour mouler des bâtons à lèvres, comportant au moins un moule (2), dans lequel la masse à mouler peut être versée, ainsi qu'un noyau (3), qui peut être inséré dans le ou les moules (2) et en être réextraits, **caractérisé en ce que** le ou les noyaux (3) comportent des éléments mobiles (4), qui peuvent être extraits d'évidements (5) aménagés dans le noyau (3) et être introduits dans les évidements (5) aménagés dans le noyau (3), et les éléments mobiles (4), dans leur état extrait, sont en contact avec la face intérieure du moule (2) en un point tel qu'un composant, qui alors a été incorporé, ne peut entrer en contact avec ce point de la face intérieure du moule (2).

2. Dispositif formant moule (1) selon la revendication 1, **caractérisé en ce que** les éléments mobiles (4) sont mis en mouvement sous l'effet d'une pression.

3. Dispositif formant moule (1) selon la revendication 1, **caractérisé en ce que** les éléments mobiles (4) sont mis en mouvement sous l'effet d'un magnétisme.

4. Dispositif formant moule (1) selon l'une des revendications 1 à 3, **caractérisé en ce que** la face extérieure du noyau (3) est revêtue d'un matériau anti-adhésif.

5. Dispositif formant moule (1) selon l'une des revendications 1 à 4, **caractérisé en ce que** le noyau (3) comprend des canaux pour un fluide caloporteur et/ou frigorigène.

6. Procédé pour mouler des masses constituées d'au moins deux composants, en particulier pour mouler des bâtons à lèvres, le procédé comprenant les étapes suivantes :
- introduction d'au moins un noyau (3) dans au moins un moule (2),
- introduction, dans le moule (2), d'un premier composant des au moins deux composants de la masse à mouler,
- modification des faces extérieures du noyau (3),
- extraction du noyau (3), avec ses faces extérieures modifiées, à partir du moule (2), et
- introduction, dans le moule (2) d'un deuxième composant des au moins deux composants de la masse à mouler,
**caractérisé en ce que**
- on modifie la face extérieure du noyau (3) à l'aide d'éléments mobiles, ce à l'occasion de quoi les éléments mobiles (4) peuvent être extraits d'évidements aménagés dans le noyau (3) et peuvent être réintroduits dans les évidements aménagés dans le noyau (3), et les éléments mobiles (4), dans leur état extrait, sont en contact avec la face intérieure du moule (2) en un point tel qu'un composant, qui alors a été incorporé, ne peut entrer en contact avec ce point de la face intérieure du moule (2).
